# FASCICULE DE BREVET EUROPEEN

(11) **EP 1 459 252 B1**
(45) Date de publication et mention de la délivrance du brevet: **21.03.2012**
(21) Numéro de dépôt: 02804943.5
(22) Date de dépôt: 18.12.2002
(51) Int. Cl.: G06K 19/077

(54) **CARTE A PUCE**
CHIPKARTE
SMART CARD

(30) Priorité: 18.12.2001 FR 0116842
(43) Date de publication de la demande: 22.09.2004
(73) Titulaire: Gemalto SA, 92190 Meudon (FR)
(72) Inventeur: DHERS, Gilles, Résidence Les Romarins, F-13470 Carnoux en Provence (FR)
(86) Numéro de dépôt international: PCT/FR2002/004430
(87) Numéro de publication internationale: WO 2003/052685

(56) Documents cités:
- DE-A- 19 836 395
- FR-A- 2 794 059
- FR-A- 2 806 661
- US-A- 6 112 901

## Description

La présente invention concerne une carte du type carte à puce, comprenant un corps de carte généralement en une matières plastique, contenant par exemple dans une cavité prévue à cet effet un ou plusieurs circuits intégrés à contacts électriques formant un module intelligent également dénommé puce.

L'invention concerne plus précisément, mais de manière non limitative, les mini-cartes. Les cartes à puces connues ont un format normalisé : elles ont la forme d'un rectangle de 8,5 cm de long environ sur 5,4 cm de large environ. Dans certaines applications, ce format n'est pas idéal. Par exemple, dans les téléphones portables actuels, le format mentionné ci-dessus, malgré sa petite taille, est inutilisable.

Ainsi, dans ce type d'applications, on utilise des cartes à puce de format plus petit que le format mentionné ci-dessus, également appelées mini-cartes. Selon une conception bien connue, il est possible de transformer simplement la carte support en une mini-carte en détachant cette dernière du support par rupture de bretelles ou ponts de liaison reliant la mini-carte à son support, cette rupture pouvant être effectuée manuellement Une telle conception est décrite car exemple dans le document FR 2 806 661.

Le procédé de fabrication du support et de la mini-carte nécessite une étape d'usinage pour découper la fente permettant de détacher la mini-carte, ou encore, dans le cas des cartes moulées, l'utilisation d'un moule d'injection complexe.

Par ailleurs, dans de nombreuses applications, l'utilisateur final n'a besoin que de la mini-carte, et le support lui-même n'est pas utilisé.

Or les cartes actuelles sont fabriquées par emboutissage ou par moulage à partir de matériaux tels que le PVC (Polychlorure de Vinyle), le PET (polyéthylène Téréphtalate) ou LABS (Acrylonitrile Butadiène Styrène). Ces matériaux sont relativement coûteux et constituent pratiquement 95% en poids de l'ensemble mini-carte/support. En conséquence, Il y a une perte importante dans la conception actuelle des mini-cartes.

En outre, le matériau constituant le support est une matière plastique non biodégradable et donc néfaste à l'environnement.

Le but de la présente invention est de mettre au point une carte du type carte à puce portée par un support, éventuellement susceptible d'être détachée de ce support, ayant un coût intrinsèque et/ou de fabrication moins élevé que les cartes de ce type connues.

La présente invention propose à cet effet une carte à puce comprenant un corps de carte en une première matière, ledit corps de carte étant solidaire d'un support en une seconde matière, caractérisée en ce que ledit corps est surmoulé sur la surface dudit support de sorte que ladite carte est rendue solidaire de ce dernier par soudure locale desdites première et deuxième matières.

Le surmoulage est une opération très simple, qui, dans le cas des mini-cartes, évite les opérations d'usinage ou de moulage de très grande précision, et réduit donc coût de fabrication.

Par ailleurs, grâce à l'invention, on peut utiliser pour le corps de carte et pour le support des matériaux différents, ce qui permet de choisir pour le support un matériau à moindre coût et/ou biodégradable.

La carte selon invention peut donc très avantageusement constituer une mini-carte, notamment une mini-carte SIM.

Selon l'invention, lorsque les première et deuxième matières sont des matières plastiques distinctes, on surmoule le corps de carte sur le support à une température supérieure aux températures de transition vitreuse respectives des matières et voisine de la température de transformation de ladite seconde matière.

Lorsque les première et deuxième matières sont des matières plastiques identiques, on surmoule le corps de carte sur le support à une température supérieure d'au moins 100°C à la température de transition vitreuse des matières.

Ainsi, par simple chauffage, on provoque une fusion locale des matières du corps de carte et du support, qui conduit à une inter-diffusion locale des deux matières permettant d'obtenir un collage mécanique et en partie chimique, sans utilisation d'adhérent intermédiaire.

Ceci est un avantage important, car l'utilisation d'un adhérent intermédiaire rendrait nécessaire une fabrication en deux temps (carte à puce d'une part, support de l'autre), et une étape de collage ultérieure des deux éléments, ce qui accroîtrait de manière prohibitive le coût de fabrication.

Le procédé selon l'invention évite en outre la nécessité de pratiquer une fente par usinage ou par moulage dans le cas de la fabrication d'une mini-carte, de sorte qu'il est nettement moins onéreux que les procédés de l'art antérieur.

De manière avantageuse, chacune des matières plastiques a une température de transformation supérieure d'environ 150°C à sa température de transition vitreuse. Ceci permet de s'assurer que la température de transition vitreuse du support est largement dépassée lors du surmoulage et donc que l'on obtient l'adhérence souhaitée.

D'autres caractéristiques et avantages de la présente invention apparaîtront à la lecture de la description qui suit d'un mode de réalisation de la présente invention, donné à titre illustratif et nullement limitatif.

Dans les figures suivantes :
- la figure 1 représente de manière très schématique une carte selon l'invention,
- la figure 2 illustre de manière très schématique également un dispositif pour la mise en oeuvre du procédé selon l'invention,
- la figure 3 montre une bande issue du procédé mis en oeuvre par le dispositif de la figure 2.

Dans toutes ces figures, les éléments communs portent les mêmes numéros de référence.

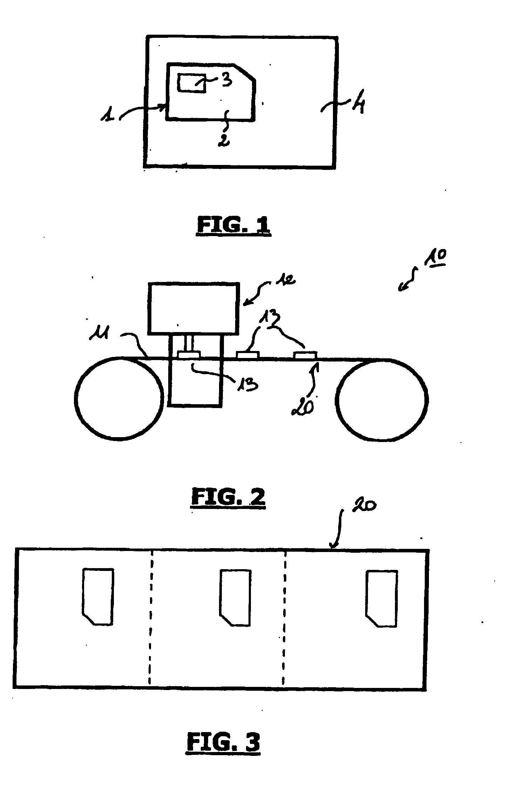

On voit en figure 1 une carte à puce 1 selon l'invention, comprenant un corps de carte 2 muni dans une cavité prévue à cet effet (non représentée) d'une puce 3. La carte à puce 1 illustrée sur la figure 1 est une mini-carte du type mini-carte SIM, utilisable notamment dans les téléphones mobiles actuels. Le corps de carte 2 est par exemple en ABS.

Selon l'invention, le corps de carte 2 est solidaire d'un support 4 en papier par exemple, par surmoulage du corps de carte 2 à la surface du support 4 de manière à provoquer une soudure de l'ABS du corps de carte 2 et du papier du support 4. Il n'y a pas de colle ou tout autre intermédiaire de collage entre le corps de carte 2 et le support 4.

Pour fabriquer une carte selon l'invention, on utilise un dispositif 10 représenté très schématiquement en figure 2. On fait défiler une bande de papier 11 destinée à former le support 4 à l'intérieur d'un moule d'injection 12, de préférence un moule multi-empreintes (non représenté), c'est-à-dire permettant de surmouler plusieurs corps de carte simultanément. La bande de papier 11 peut être pré-imprimée.

A Intervalles réguliers sur la bande de papier 11, le moule d'injection 12 vient appliquer l'empreinte 13 servant à injecter le corps de carte 2 sur la bande de papier 11, puis injecter la matière plastique (ABS) dans cette empreinte 13 de manière à effectuer le surmoulage du corps de carte 2 sur le support 4. Pour cela, le défilement de la bande de papier 11 est arrêté de manière périodique.

L'insertion de la puce 3 est effectuée soit en même temps, soit après par encartage.

On obtient en sortie du dispositif 10 une bande 20 dont un morceau est représenté schématiquement en figure 3. Il suffit ensuite de venir découper la bande 20 pour former les cartes selon l'invention telle que celle représentée en figure 1.

Dans le procédé selon l'invention, la température de surmoulage est choisie de manière à permettre d'une part une adhésion suffisante du corps de carte 2 au support 4 de manière à souder les deux éléments ensemble et empêcher une séparation involontaire de la carte 1, et d'autre part de détacher manuellement la carte 2 sans reliquat de matière en provenance du support 4 sur sa face inférieure.

Ainsi, lorsque les matières constituant le corps de carte 2 et le support 4 sont des matières plastiques distinctes l'une de l'autre, par exemple lorsque le corps de carte est en ABS et le support en PET (Polyéthylène Téréphtalate), la température du surmoulage est supérieure aux températures de transition vitreuse respectives des deux matières et voisine de la température de transformation du PET constituant le support 4.

Dans cet exemple, on peut choisir par exemple une température de surmoulage d'environ 250°C, étant donné que la température de transition vitreuse de l'ABS est voisine de 100°C, celle du PET est voisine de 80°C, et que la température de transformation de l'ABS et du PET est voisine de 250°C.

Lorsque les matières plastiques constituant le corps de carte 2 et le support 4 sont des matières plastiques identiques, par exemple lorsque le corps de carte et le support sont en ABS, la température du surmoulage est de préférence supérieure d'au moins 100°C à la température de transition vitreuse de la matière. Elle peut être d'environ 250°C dans le cas de l'ABS.

Bien entendu, l'invention n'est pas limitée au mode de réalisation qui vient d'être décrit.

Ainsi, elle peut concerner non seulement une mini-carte SIM, mais également tout autre type de carte à puce que l'on souhaite rendre solidaire d'un support tout en étant détachable de ce dernier.

Par ailleurs, on peut choisir n'importe quel type de matériau pour le corps de carte et pour le support, du moment que ces deux matériaux peuvent être soudés entre eux lors du surmoulage. En général néanmoins, le corps de carte sera toujours en matière plastique, alors que le support peut ne pas l'être (papier, matière biodégradable).

Le procédé selon l'invention peut être appliqué sur des bandes de support que l'on vient ensuite découper, ou sur des supports prédécoupés au format souhaité (par exemple carte de visite), avec pré- ou post-impression.

Par ailleurs, pour favoriser la solidarisation de la carte au support, on peut, notamment dans le cas où les matières constituant la carte et le support sont faiblement compatibles entre elles, effectuer un emboutissage du support préalablement au surmoulage de la carte pour accroître le maintien mécanique de cette dernière sur le support.

## Revendications

1. Carte (1) à puce comprenant un corps de carte (2) en une première matière, ledit corps de carte (2) étant solidaire d'un support (4) en une seconde matière,
**caractérisée en ce que** ledit corps (2) est surmoulé sur la surface dudit support (4) de sorte que ladite carte (1) est rendue solidaire de ce dernier par soudure locale desdites première et deuxième matières.

2. Carte selon la revendication 1 **caractérisée en ce que** ledit support (4) est en un matériau choisi parmi les matières plastiques, le papier et les matières bio-dégradables.

3. Carte selon l'une des revendications 1 ou 2 **caractérisé en ce que** ledit corps (2) est en une matière plastique, de préférence en ABS, PVC ou PET.

4. Carte selon l'une des revendications 1 à 3 **caractérisée en ce qu'**elle est détachable dudit support (4).

5. Carte selon l'une des revendications 1 à 4 **caractérisée en ce qu'**elle constitue une mini-carte, telle qu'une mini-carte SIM.

6. Procédé de fabrication d'une carte à puce (1) selon l'une des revendications 1 à 5 **caractérisé en ce que**, lorsque lesdites première et deuxième matières sont des matières plastiques distinctes, on surmoule ledit corps de carte (2) sur ledit support (4) à une température supérieure aux températures de transition vitreuse respectives desdites matières et voisine de la température de transformation de ladite seconde matière.

7. Procédé de fabrication d'une carte à puce (1) selon l'une des revendications 1 à 5 **caractérisé en ce que**, lorsque lesdites première et deuxième matières sont des matières plastiques identiques, on surmoule ledit corps de carte (2) sur ledit support (4) à une température supérieure d'au moins 100°C à la température de transition vitreuse desdites matières.

8. Procédé selon l'une des revendications 6 ou 7 **caractérisé en ce que** chacune desdites matières a une température de transformation supérieure d'environ 150°C à sa température de transition vitreuse.

## Claims

1. A chip card (1) including a card body (2) made of a first material, with said card body (2) being integral with a support (4) made of a second material,
**characterised in that** said body (2) is moulded over the surface of said support (4) so that said card (1) is made integral with said support by local welding of said first and second materials.

2. A card according to claim 1, **characterised in that** said support (4) is made of a material selected among plastic materials, paper and biodegradable materials.

3. A card according to one of claims 1 or 2, **characterised in that** said body (2) is made of a plastic material, preferably ABS, PVC or PET.

4. A card according to one of claims 1 to 3, **characterised in that** it can be detached from said support (4).

5. A card according to one of claims 1 to 4, **characterised in that** it is a mini card, such as a SIM mini card.

6. A method for producing a chip card (1) according to one of claims 1 to 5, **characterised in that**, when said first and second materials are different plastic materials, said card body (2) is moulded over said support (4) at a temperature higher than the respective glass transition temperatures of said materials and close to the transformation temperature of said second material.

7. A method for producing a chip card (1) according to one of claims 1 to 5, **characterised in that**, when said first and second materials are identical plastic materials, said card body (2) is moulded over said support (4) at a temperature at least 100°C higher than the glass transition temperature of said materials.

8. A method according to one of claims 6 or 7, **characterised in that** each one of said materials has a transformation temperature approximately 150°C higher than the glass transition temperature thereof.

## Patentansprüche

1. Chipkarte (1), bestehend aus einem Kartenkörper (2) aus einem ersten Material, wobei der genannte Kartenkörper (2) fest mit einen Träger (4) aus einem zweiten Material verbunden ist, **dadurch gekennzeichnet, dass** der genannte Körper (2) auf die Oberfläche des genannten Trägers (4) aufgeformt ist, so dass die genannte Karte (1) fest mit diesem verbunden wird durch lokale Verschweißung des ersten und zweiten Materials.

2. Karte gemäß Anspruch 1, **dadurch gekennzeichnet, dass** der genannte Träger (4) aus einem Material besteht, das unter Kunststoffen, Papier und biologisch abbaubaren Stoffen gewählt wird.

3. Karte gemäß einem der Ansprüche 1 oder 2, **dadurch gekennzeichnet, dass** der genannte Körper (2) aus einem Kunststoff, bevorzugt aus ABS, PVC oder PET besteht.

4. Karte gemäß einem der Ansprüche 1 bis 3, **dadurch gekennzeichnet, dass** sie vom genannten Träger (4) abnehmbar ist.

5. Karte gemäß einem der Ansprüche 1 bis 4, **dadurch gekennzeichnet, dass** sie eine Mini-Karte, wie beispielsweise eine SIM-Karte bildet.

6. Herstellungsverfahren einer Chipkarte (1) gemäß einem der Ansprüche 1 bis 5, **dadurch gekennzeichnet, dass** man, wenn das genannte erste und zweite Material unterschiedliche Kunststoffe sind, den genannten Kartenkörper (2) auf den genannten Träger (4) aufformt, bei einer höheren Temperatur als die jeweiligen Glasübergangstemperaturen der genannten Stoffe und nahe der Umwandlungstemperatur des genannten zweiten Stoffes.

7. Herstellungsverfahren einer Chipkarte (1) gemäß einem der Ansprüche 1 bis 5, **dadurch gekennzeichnet**, das man, wenn das genannte erste und zweite Material identische Kunststoffe sind, den genannten Kartenkörper (2) auf den genannten Träger (4) aufformt, bei einer um mindestens 100°C höheren Temperatur als die Glasübergangstemperatur der genannten Stoffe.

8. Verfahren gemäß einem der Ansprüche 6 oder 7, **dadurch gekennzeichnet, dass** jede der Materialien eine Umwandlungstemperatur aufweist, die um etwa 150°C höher ist als seine Glasübergangstemperatur.
